# EUROPEAN PATENT SPECIFICATION

(11) **EP 4 168 504 B1**
(45) Date of publication and mention of the grant of the patent: **08.05.2024**
(21) Application number: 21742199.9
(22) Date of filing: 14.05.2021
(51) Int. Cl.: C09D 183/04

(54) **LOW INTENSITY RADIATION CURABLE SILICONE RELEASE COATING COMPOSITION AND METHOD FOR ITS PREPARATION AND USE**
STRAHLUNGSHÄRTBARE SILIKONTRENNSCHICHTZUSAMMENSETZUNG MIT NIEDRIGER INTENSITÄT, VERFAHREN ZU DEREN HERSTELLUNG UND VERWENDUNG
COMPOSITION DE REVÊTEMENT À LIBÉRATION DE SILICONE DURCISSABLE PAR RAYONNEMENT À FAIBLE INTENSITÉ ET SON PROCÉDÉ DE PRÉPARATION ET D'UTILISATION

(30) Priority: 22.06.2020 US 202063042253 P
(43) Date of publication of application: 26.04.2023
(73) Proprietor: Dow Silicones Corporation, Midland, MI 48686-0994 (US)
(72) Inventor: PARK, Yungjin, Jincheon-gun, Chungcheongbuk-do 27807 (KR)
(74) Representative: Murgitroyd & Company
(86) International application number: PCT/US2021/032360
(87) International publication number: WO 2021/262337

(56) References cited:
- US-A1- 2011 124 804

## Description

### TECHNICAL FIELD

A curable silicone release coating composition cures to form a silicone release coating by exposure to low intensity UV radiation. The curable silicone release coating composition has long pot life and short cure time.

### INTRODUCTION

Silicone release coatings are often prepared by platinum catalyzed hydrosilylation of a curable composition including a vinyl terminated polydiorganosiloxane base polymer, a polyorganohydrogensiloxane crosslinker, a platinum catalyst, and other additives, as disclosed in US 2011/124804 A1. The compositions may be stored under conditions to avoid premature cure and are typically mixed shortly before use. The curable composition can then begin to cure.

There is a need in the release coating industry for curable compositions to have relatively long bath life, *i.e.*, it desirable for the curable composition to remain as a flowable liquid (without viscosity increase or with less than doubling in viscosity) during the time in which the curable composition is in coating bath for use with coating equipment. The coating equipment is used to coat the curable composition onto a surface of a substrate, such as a backing paper or plastic film. The curable composition is then cured, e.g., by heating and/or exposure to actinic radiation to form a release liner.

An inhibitor, such as 1-ethynyl-1-cyclohexanol (ETCH), is an additive typically included in the curable composition to increase pot life. However, adding the inhibitor can slow cure speed of the curable composition, such that after the curable composition is coated on the surface of the substrate, high temperatures and/or long heating times (for thermally cured compositions) or intense UV radiation exposure (for UV initiated systems) are needed to cure the composition to form the release coating on the substrate. Relatively high platinum loadings may also be needed, e.g., for high speed coating and curing equipment, and this can add significant cost. Therefore, there is an industry need for a cost effective curable silicone release coating composition, which is curable to form a silicone release coating, wherein the composition has both long pot life and short cure time.

### SUMMARY

A composition is curable to form a silicone release coating. This curable silicone release coating composition comprises:
(A) a polyorganosiloxane having at least two aliphatically unsaturated groups per molecule,
(B) a polyorganohydrogensiloxane,
(C) a platinum hydrosilylation reaction catalyst package,
(D) an inhibitor selected from the group consisting of a fumarate and a maleate, and
(E) a primary or secondary alcohol.

### DETAILED DESCRIPTION

In addition to (A) polyorganosiloxane having at least two aliphatically unsaturated groups per molecule, (B) the polyorganohydrogensiloxane, (C) the platinum hydrosilylation reaction catalyst package, (D) the inhibitor, and (E) the primary or secondary alcohol, described above, the curable composition described above may optionally further comprise one or more additional starting materials selected from the group consisting of (F) an anchorage additive, (G) a solvent, (H) a release force modifier, and (I) a filler.

### (A) Polyorganosiloxane having at least two aliphatically unsaturated groups per molecule

The polyorganosiloxane having at least two aliphatically unsaturated groups per molecule is present in the curable silicone release coating composition in an amount of 90 to 99 weight parts.

The polyorganosiloxane selected for starting material (A) may be linear, branched, or resinous (i.e., have a three-dimensional network), or may comprise a combination of different structures. Starting material (A) may comprise a branched polyorganosiloxane. The branched polyorganosiloxane may have formula (A-1): 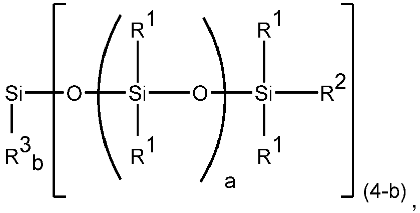 where each R¹ is an independently selected monovalent hydrocarbon group free of aliphatic unsaturation; each R² is independently selected from the group consisting of R¹ and an aliphatically unsaturated monovalent hydrocarbon group; with the proviso that, on average per molecule, at least two instances of R² are the aliphatically unsaturated monovalent hydrocarbon group; subscript b is 0 or 1; R³ is an independently selected monovalent hydrocarbon group free of aliphatic unsaturation; and each subscript a independently has a value of 30 to 60.

The monovalent hydrocarbon group free of aliphatic unsaturation for R¹ is exemplified by an alkyl group of 1 to 6 carbon atom or an aryl group of 6 to 12 carbon atoms. Suitable alkyl groups include methyl, ethyl, propyl, butyl, pentyl, hexyl, and branched isomers thereof. Suitable aryl groups include phenyl, tolyl, xylyl, naphthyl, 1-phenyl ethyl, and 2-phenyl ethyl. Alternatively, each R¹ may be an alkyl group. Alternatively, each R¹ may be independently selected from methyl, ethyl or propyl. Each instance of R¹ may be the same or different. Alternatively, each R¹ may be a methyl group.

The aliphatically unsaturated monovalent hydrocarbon group (for R²) is capable of undergoing hydrosilylation reaction. Suitable aliphatically unsaturated hydrocarbon groups are exemplified by an alkenyl group such as vinyl, allyl, butenyl, and hexenyl; or alkynyl groups such as ethynyl and propynyl. Alternatively, each aliphatically unsaturated monovalent hydrocarbon group in formula (A-1) may be vinyl, allyl, or hexenyl. Alternatively, each aliphatically unsaturated monovalent hydrocarbon group in formula (A-1) may be a vinyl group. Alternatively, each R² in formula (A-1) may be aliphatically unsaturated.

Each R³ in formula (A-1) may be an alkyl group of 1 to 6 carbon atoms. Alternatively, each R³ may be independently selected from methyl, ethyl or propyl. Alternatively, each R³ may be a methyl group.

Alternatively, the branched polyorganosiloxane of formula (A-1) may have a viscosity of 100 mPa·s to 600 mPa·s, alternatively 200 mPa·s to 400 mPa·s, as measured at RT by the test method described below for the linear or substantially linear polyorganosiloxane.

Alternatively, R² and the subscripts may be selected such that the branched polyorganosiloxane has an aliphatically unsaturated group (e.g., vinyl) content of 0.3% to 1.2%, alternatively 0.5% to 1%. Suitable branched polyorganosiloxanes for starting material (A-1) are exemplified by those disclosed in U.S. Patent 4,374,967; U.S. Patent 6,806,339; and U.S. Patent Publication 2007/0289495.

Alternatively, in addition to, or instead of, (A-1) the branched polyorganosiloxane, starting material (A) may comprise a linear polydiorganosiloxane. The linear polydiorganosiloxane may have formula (A-2): 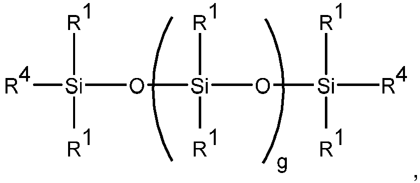 where R¹ is as described above, each R⁴ is an aliphatically unsaturated monovalent hydrocarbon group, and subscript g has a value such that 40 ≤ g ≤ 600.

Suitable aliphatically unsaturated hydrocarbon groups for R⁴ are exemplified by an alkenyl group such as vinyl, allyl, butenyl, and hexenyl; or alkynyl groups such as ethynyl and propynyl. Alternatively, each R⁴ in formula (A-2) may be vinyl, allyl, or hexenyl. Alternatively, each R⁴ in formula (A-2) may be a vinyl group.

Alternatively, the subscripts in formula (A-2) above may have values sufficient to provide an aliphatically unsaturated group content (e.g., vinyl content) of 0.1% to 1.7%, alternatively 0.2% to 0.5%, based on the weight of the linear polydiorganosiloxane of formula (A-2).

Examples of linear polydiorganosiloxanes suitable for use as starting material (A-2) include i) α,ω-dimethyivinyisiioxy-terminated polydimethylsiloxane, ii) α,ω-dimethyivinyisiioxy-terminated poly(dimethylsiloxane/methylphenylsiloxane), iii) α,ω-dimethyivinyisiioxy-terminated poly(dimethylsiloxane/diphenylsiloxane), iv) α,ω-(phenyl,methyl,vinyl-siloxy-terminated) polydimethylsiloxane, v) α,ω-dimethylhexenylsiloxy-terminated polydimethylsiloxane, and vi) a combination of two or more of i) to v).

Methods of preparing polydiorganosiloxanes of formula (A-2), such as hydrolysis and condensation of the corresponding organohalosilanes or equilibration of cyclic polydiorganosiloxanes, are well known in the art.

Alternatively, starting material (A) may comprise resinous polyorganosiloxane. Resinous polyorganosiloxanes suitable for starting material (A) are known in the art. For example, U.S. Patent 8,580,073 at col. 3, line 5 to col. 4, line 31, discloses silicone resins, which be prepared by any suitable method, such as cohydrolysis of the corresponding silanes or by silica hydrosol capping methods. The resinous polyorganosiloxane may be prepared by silica hydrosol capping processes such as those disclosed in U.S. Patent 2,676,182 to Daudt, et al.; U.S. Patent 4,611,042 to Rivers-Farrell et al.; and U.S. Patent 4,774,310 to Butler, et al. The method of Daudt, et al. described above involves reacting a silica hydrosol under acidic conditions with a hydrolyzable triorganosilane such as trimethylchlorosilane, a siloxane such as hexamethyldisiloxane, or mixtures thereof, and recovering a copolymer having M-units and Q-units. The resulting copolymers generally contain from 2 to 5 percent by weight of hydroxyl groups.

When prepared, the resinous polyorganosiloxane comprises monofunctional (M) units of formula (R¹₂R²SiO_{1/2}) and quadrifunctional (Q) units of formula (SiO_{4/2}), where R¹ and R² are as described above. For example, the resinous polyorganosiloxane may comprise unit formula (R¹R⁴SiO_{1/2})ₕ(R¹₃SiO_{1/2})ᵢ(SiO_{4/2})ⱼ, where R¹ and R⁴ are as described above, subscripts h, i, and j represent mole fractions, subscript h > 0, subscript i ≥ 0, subscript j > 0, a quantity (h + i + j) ≤ 1. The resinous polyorganosiloxane may further comprises units with silanol (silicon bonded hydroxyl) groups and may comprise neopentamer of formula Si(OSiR²₃)₄, where R² is as described above. Si²⁹ Nuclear Magnetic Resonance (NMR) spectroscopy, as described in U.S. Patent 9,593,209 at col. 32, Reference Example 2, may be used to measure molar ratio of M and Q units, where said ratio is expressed as {M(resin)+(M(neopentamer)}/{Q(resin)+Q(neopentamer)} and represents the molar ratio of the total number of M units of the resinous and neopentamer portions of the resinous polyorganosiloxane to the total number of Q units in the resinous and neopentamer portions.

The Mn of the resinous polyorganosiloxane depends on various factors including the types of hydrocarbyl groups represented by R¹ and R² that are present. The Mn of the resinous polyorganosiloxane refers to the number average molecular weight measured using gel permeation chromatography (GPC) according to the procedure in U.S. Patent 9,593,209 at col. 31, Reference Example 1, when the peak representing the neopentamer is excluded from the measurement. The Mn of the resinous polyorganosiloxane may be 1,000 g/mol to 10,000 g/mol. Alternatively, Mn of the resinous polyorganosiloxane may be 1,500 g/mol to 5,000 g/mol. The

The resinous polyorganosiloxane prepared as described above typically contains silicon bonded hydroxyl groups, i.e., of formulae, HOSi_{3/2} and/or (HO)ₖR²₍₃₋ₖ₎SiO_{1/2}, where subscript k is 1, 2, or 3. The resinous polyorganosiloxane may comprise up to 2% of silicon bonded hydroxyl groups. The concentration of silicon bonded hydroxyl groups present in the polyorganosilicate resin may be determined using Fourier Transform-Infra Red (FTIR) spectroscopy according to ASTM Standard E-168-16. For certain applications, it may desirable for the amount of silicon bonded hydroxyl groups to be below 0.7%, alternatively below 0.3%, alternatively less than 1%, and alternatively 0.3% to 0.8%. Silicon bonded hydroxyl groups formed during preparation of the resinous polyorganosiloxane can be converted to trihydrocarbyl siloxane groups by reacting the silicone resin with a silane, disiloxane, or disilazane containing the appropriate terminal group. Silanes containing hydrolyzable groups may be added in molar excess of the quantity required to react with the silicon bonded hydroxyl groups on the resinous polyorganosiloxane.

Alternatively, the resinous polyorganosiloxane may further comprises 2% or less, alternatively 0.7% or less, and alternatively 0.3% or less, and alternatively 0.3% to 0.8% of units represented by formula XSiO_{3/2} and/or XR²₂SiO_{1/2} where R² is as described above, and X represents a hydrolyzable substituent.

The resinous polyorganosiloxane typically has terminal aliphatically unsaturated groups. The resinous polyorganosiloxane having terminal aliphatically unsaturated groups may be prepared by reacting the product prepared as described above with an unsaturated organic group-containing endblocking agent and an endblocking agent free of aliphatic unsaturation, in an amount sufficient to provide from 1.2% to 6%, alternatively 1.5% to 6%, and alternatively 1.6% to 5.5%, of aliphatically unsaturated groups, based on weight of the resinous polyorganosiloxane. Examples of endblocking agents include, but are not limited to, silazanes, siloxanes, and silanes. Suitable endblocking agents are known in the art and exemplified in U.S. Patents 4,584,355; 4,591,622; and 4,585,836. A single endblocking agent or a mixture of such agents may be used to prepare such resin.

Starting material (A) may comprise a combination or two or more different polyorganosiloxanes that differ in at least one property such as structure, molecular weight, monovalent groups bonded to silicon atoms and content of aliphatically unsaturated groups.

### (B) Polyorganohydrogensiloxane

Starting material (B) in the curable silicone release coating composition is a polyorganohydrogensiloxane. The polyorganohydrogensiloxane may be linear, branched, or a combination thereof. The amount of polyorganohydrogensiloxane may be 1 weight part to 10 weight parts of polyorganohydrogensiloxane in the curable silicone release coating composition.

Starting material (B) may comprise a polydiorganohydrogensiloxane of unit formula (B-1) (R¹₃SiO_{1/2})ₚ(R¹₂SiO_{2/2})_{q}(R¹HSiO_{2/2})ᵣ(R¹₂HSiO_{1/2})ₛ, where R¹ is as described above, and subscripts p, q, r, and s have values such that p is 0, 1, or 2, q ≥ 1, r ≥ 0, and s is 0, 1, or 2, with the proviso that a quantity (p + s) = 2. A quantity (p + q + r + s) may have a value sufficient to provide the polydiorganohydrogensiloxane with a viscosity of 5 mPa·s to 200 mPa·s, alternatively 5 mPa·s to 100 mPa·s, at RT as measured by the test method described above for starting material (A). Alternatively, the subscripts may have values such that 5 ≤ (p + q + r + s) ≤ 100. Alternatively, when r = 0, then s ≥ 3.

Alternatively, in unit formula (B-1) each R¹ may be selected from the group consisting of methyl and phenyl, subscript q may be 0 to 30, and subscript r may be 5 to 50. Alternatively, 10 ≤ (q + r) ≤ 50. Alternatively, the subscripts may be selected such that the polydiorganohydrogensiloxane of unit formula (B-1) has a silicon bonded hydrogen (SiH) content of 0.02% to 1.2%; alternatively 0.05% to 1.2%; and alternatively 0.02% to 0.3%.

Polydiorganohydrogensiloxanes of formula (B-1) are exemplified by: i) α,ω-dimethylhydrogensiloxy-terminated polydimethylsiloxane, ii) α,ω-dimethyihydrogensiioxy-terminated poly(dimethylsiloxane/methylhydrogensiloxane), iii) α,ω-dimethyihydrogensiioxy-terminated polymethylhydrogensiloxane, iv) α,ω-trimethyisiioxy-terminated poly(dimethylsiloxane/methylhydrogensiloxane), v) α,ω-trimethyisiioxy-terminated polymethylhydrogensiloxane, vi) α,ω-trimethyisiioxy-terminated poly(dimethylsiloxane/methylphenylsiloxane/methylhydrogensiloxane), vii) α,ω-dimethylhydrogen-siloxy-terminated polymethylphenylsiloxane, and viii) a combination of two or more of i), ii), iii), iv), v), vi), and vii).

Methods of preparing polydiorganohydrogensiloxanes, such as hydrolysis and condensation of organohalosilanes, are well known in the art.

Alternatively, starting material (B), the polyorganohydrogensiloxane may comprise a branched polyorganohydrogensiloxane (e.g., in addition to the polydiorganohydrogensiloxane described above). The branched polyorganohydrogensiloxane may have unit formula (B-2): (R¹₂HSiO_{1/2})ₜ(R¹₃SiO_{1/2})₍₄₋ₜ₎(R¹₂SiO_{2/2})ᵤ(SiO_{4/2}), where R¹ is as described above, subscript t is 1 to 4, and subscript u ≥ 0. Alternatively, subscript u may be 0. Alternatively, subscript t may be 2 to 4, alternatively 3 to 4, and alternatively 4. The branched polyorganohydrogensiloxane may have an SiH content of 1 % to 1.2 % by weight of the branched polyorganohydrogensiloxane. The branched polyorganohydrogensiloxane may be prepared by known methods, such as equilibration of a branched organohydrogensiloxane oligomer and a cyclic polydiorganosiloxane, as disclosed, for example in U.S. Patent Application Publication 2019/0144752 or hydrolysis and condensation of an organohydrogensiloxane oligomer and an alkylorthosilicate.

### (C) Platinum hydrosilylation reaction catalyst package

Starting material (C) in the curable silicone release coating composition is a platinum hydrosilylation reaction catalyst package comprising:
(C-1) a complex of platinum with an unsaturated siloxane in an amount sufficient to provide < 200 ppm of platinum metal, based on combined weights of starting materials (A), (B), (C), (D), and (E); and
(C-2) a platinum complex having a cyclopentadienyl group that is eta-bonded to the platinum atom and an alkyl group and/or an aryl group that is sigma-bonded to the platinum atom in an amount sufficient to provide ≤ 100 ppm of platinum, based on combined weights of starting materials (A), (B), (C), (D), and (E). Combined amounts of starting materials (C-1) and (C-2) are sufficient to provide a platinum content of 10 ppm to 200 ppm based on combined weights of starting materials (A), (B), (C), (D), and (E). Alternatively, the amount of starting material (C-1) may be sufficient to provide 20 ppm to 40 ppm platinum based on combined weights of starting materials (A), (B), (C), (D), and (E). Alternatively, the amount of starting material (C-2) may be sufficient to provide 10 ppm to 30 ppm platinum based on combined weights of starting materials (A), (B), (C), (D), and (E).

### (C-1) Complex of platinum with an unsaturated siloxane

Complexes of platinum with unsaturated siloxanes, and methods for their preparation, are disclosed, e.g., in U.S. Patent 3,814,730 to Karstedt. The complex of platinum with an unsaturated siloxane may be prepared by effecting contact between an unsaturated siloxane and a platinum halide, treating the resulting mixture to effect the removal of available inorganic halogen, and recovering the complex. The unsaturated siloxane may be a disiloxane of unit formula (R¹ᵥR⁴₍₃₋ᵥ₎SiO_{1/2})₂, where R¹ and R⁴ are as described above, and each subscript v is 0 to 2. Examples of suitable disiloxanes include divinyltetramethyldisiloxane, hexavinyldisiloxane, trivinyltrimethyldimethoxysilane, and tetravinyldimethyldisiloxane. Alternatively, the unsaturated siloxane may be a cyclic siloxane of unit formula (R¹R⁴SiO_{2/2})_{w}, where R¹ and R⁴ are as described above, and subscript w is 3 to 12. The platinum halide that can be used is exemplified by H₂PtCl₆·nH₂O, NaHPtCl₆·nH₂O; KHPtCl₆·nH₂O or other platinum halides such as those disclosed in U.S. Patent 3,159,601 to Ashby or U.S. Patent 3,220,972 to Lamoreaux. Suitable catalysts for starting material (C-1) are commercially available and include 1,3-divinyl-1,1,3,3-tetramethyldisiloxane complexes with platinum (Karstedt's Catalyst).

### (C-2) Platinum complex having a cyclopentadienyl group

Starting material (C-2) in the catalyst package is a platinum complex having a cyclopentadienyl group that is eta-bonded to the platinum atom and a group that is sigma-bonded to the platinum atom. Exemplary platinum complexes having a cyclopentadienyl group that is eta-bonded to the platinum atom and a group that is sigma-bonded to the platinum atom include a platinum complex having a cyclopentadienyl group that is eta-bonded to the platinum atom and 3 aliphatic groups that are sigma-bonded to the platinum atom. Such a platinum complex may be an (η-cyclopentadienyl)tri(σ-aliphatic)platinum complex of formula: 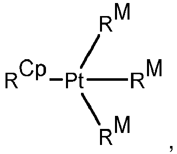 where each R^{M} is an independently selected monovalent aliphatic hydrocarbon group of 1 to 18 carbon atoms that is sigma bonded to the platinum atom, and R^{Cp} is a group which is eta-bonded to the platinum atom and which is selected from the group consisting of a cyclopentadienyl group or a cyclopentadienyl group functionalized with a substituent selected from the group consisting of a halogen atom, an alkyl group, an aromatic group, and an organosilyl group bonded to a carbon atom in the cyclopentadienyl ring. R^{M} may be a hydrocarbyl group or an acyl group. The groups for R^{M} can be straight-chain, branched-chain, and, if sufficiently large, cyclic. Examples of such (η-cyclopentadienyl)tri(σ-aliphatic)platinum complexes include trimethyl(methylcyclopentadienyl)platinum(IV); trimethyl(cyclopentadienyl)platinum(IV); ethyl,dimethyl(cyclopentadienyl)platinum(IV); triethyl(cyclopentadienyl)platinum(IV); triallyl(cyclopentadienyl)platinum(IV); trimethyl(trimethylsilylcyclopentadienyl)platinum(IV); trimethyl(dimethylphenylsilylcyclopentadienyl)platinum(IV); trimethyl[1-methyl-3-(2'-naphthyl)cyclopentadienyl]platinum(IV), and acetyl,dimethyl(cyclopentadienyl)platinum(IV). Alternatively, starting material (C-2) may be trimethyl(methylcyclopentadienyl)platinum(IV). Suitable examples of such catalysts and methods for their preparation have been disclosed, for example, in U.S. Patent 4,510,094 to Drahnak; U.S. Patent 4,916,169 to Boardman, et al.; U.S. Patent 6,376,569 to Oxman, et al.; U.S. Patent 6,451,869 to Butts; and U.S. Patent 8,088,878 to Koellnberger.

### (D) Inhibitor

Starting material (D) in the curable silicone release coating composition is an inhibitor selected from the group consisting of a fumarate and a maleate. The inhibitor may be used in an amount of > 300 ppm to < 1,000 ppm, alternatively > 300 ppm to < 900 ppm, alternatively 400 ppm to 800 ppm, based combined weights of starting materials (A), (B), (C), (D), and (E).

The inhibitor may be (D-1) a fumarate. The fumarate may have formula 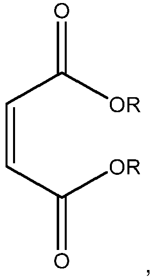 where each R is independently selected from the group consisting of an alkyl group of 1 to 4 carbon atoms and an alkenyl group of 2 to 4 carbon atoms.

Alternatively, the inhibitor may be (D-2) a maleate. The maleate may have formula 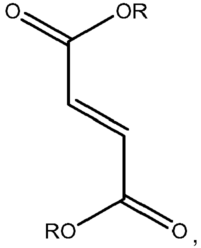 where each R is independently selected from the group consisting of an alkyl group of 1 to 4 carbon atoms and an alkenyl group of 2 to 4 carbon atoms.

Alternatively, starting material (D) may be selected from the group consisting of dimethyl fumarate, diethyl fumarate, diallyl fumarate, dimethyl maleate, diethyl maleate, dipropyl maleate, and diallyl maleate. Alternatively, starting material (D) may be selected from the group consisting of diethyl maleate, diallyl maleate, diethyl fumarate, diallyl fumarate, and a combination of two or more thereof. Suitable maleates and fumarates are commercially available.

### (E) Primary or Secondary Alcohol

Starting material (E) in the curable silicone release coating composition is a primary or secondary alcohol in an amount of > 0.3 parts by weight < 0.8 parts by weight, alternatively 0.4 parts by weight to 0.7 parts by weight, alternatively 0.5 parts by weight to 0.6 parts by weight, and alternatively 0.5 parts by weight; based on combined weights of starting materials (A), (B), (C), (D), and (E). Starting material (E) may be selected from the group consisting of an alkanol and an aromatic alcohol. Exemplary alkanols include methanol, ethanol, 1-butanol, 2-butanol, tetradecanol, iso-propanol, and iso-butanol. Exemplary aromatic alcohols include benzyl alcohol, phenol, methylphenyl carbinol, and 2-phenylethyl alcohol. Alternatively, starting material (E) may be an aromatic alcohol. Alternatively, starting material (E) may be benzyl alcohol. Suitable primary and secondary alcohols for starting material (E) are commercially available.

The curable silicone release coating composition may optionally further comprise one or more additional starting materials selected from the group consisting of (F) an anchorage additive, (G) a solvent, (H) a release force modifier, (I) a filler, and (J) a combination of two or more of (F), (G), (H), and (I).

### (F) Anchorage additive

Starting material (F) is an anchorage additive. Suitable anchorage additives are exemplified by a reaction product of a vinyl alkoxysilane and an epoxy-functional alkoxysilane; a reaction product of a vinyl acetoxysilane and epoxy-functional alkoxysilane; and a combination (*e.g.*, physical blend and/or a reaction product) of a polyorganosiloxane having at least one aliphatically unsaturated hydrocarbon group and at least one hydrolyzable group per molecule and an epoxy-functional alkoxysilane (*e.g.*, a combination of a hydroxy-terminated, vinyl functional polydimethylsiloxane with glycidoxypropyltrimethoxysilane). Suitable anchorage additives and methods for their preparation are disclosed, for example, in U.S. Patent 9,562,149; U.S. Patent Application Publication Numbers 2003/0088042, 2004/0254274, 2005/0038188; 2012/0328863 at paragraph [0091] and 2017/0233612 at paragraph [0041]; and European Patent 0 556 023. Anchorage additives are commercially available. For example, SYL OFF^{™} 297 and SYL-OFF^{™} 397 are available from Dow Silicones Corporation of Midland, Michigan, USA. Other exemplary anchorage additives include (F-1) vinyltriacetoxysilane, (F-2) glycidoxypropyltrimethoxysilane, and (F-3) a combination of (F-1) and (F-2). This combination (F-3) may be a mixture and/or a reaction product.

The exact amount of anchorage additive depends on various factors including the type of substrate and whether a primer is used, however, the amount of anchorage additive in the curable silicone release coating composition may be 0 to 2 parts by weight, per 100 parts by weight of starting material (A). Alternatively, the amount of anchorage additive, may be 0.01 to 2 parts by weight, per 100 parts by weight of starting material (A).

### (G) Solvent

Starting material (G) is a solvent. Suitable solvents are exemplified by polyalkylsiloxanes, alcohols, ketones, aromatic hydrocarbons, aliphatic hydrocarbons, glycol ethers, tetrahydrofuran, mineral spirits, naphtha, tetrahydrofuran, mineral spirits, naphtha, or a combination thereof. Polyalkylsiloxanes with suitable vapor pressures may be used as the solvent, and these include hexamethyldisiloxane, octamethyltrisiloxane, hexamethylcyclotrisiloxane and other low molecular weight polyalkylsiloxanes, such as 0.5 to 1.5 cSt DOWSIL^{™} OS FLUIDS, which are commercially available from Dow Silicones Corporation of Midland, Michigan, U.S.A.

Alternatively, starting material (G) may comprise an organic solvent. The organic solvent can be an alcohol such as methanol, ethanol, isopropanol, butanol, or n-propanol; a ketone such as acetone, methylethyl ketone, or methyl isobutyl ketone; an aromatic hydrocarbon such as benzene, toluene, or xylene; an aliphatic hydrocarbon such as heptane, hexane, or octane; a glycol ether such as propylene glycol methyl ether, dipropylene glycol methyl ether, propylene glycol n-butyl ether, propylene glycol n-propyl ether, or ethylene glycol n-butyl ether, tetrahydrofuran; mineral spirits; naphtha; or a combination thereof.

The amount of solvent will depend on various factors including the type of solvent selected and the amount and type of other starting materials selected for the release coating composition. However, the amount of solvent may be 0% to 99%, alternatively 2% to 50%, based on the weight of all starting materials in the curable silicone release coating composition. The solvent may be added during preparation of the curable silicone release coating composition, for example, to aid mixing and delivery of one or more starting materials (e.g., one or both of starting materials (C-1) and (C-2), or a resin, when a resin is used). All or a portion of the solvent may optionally be removed after the curable silicone release coating composition is prepared.

### (H) Release Modifier

The curable silicone release coating composition may contain a release modifier to control (decrease) the level of release force (the adhesive force between the release coating and an adherend thereto, such as a label including a pressure sensitive adhesive). Curable silicone release coating compositions having the required release force can be formulated from a modifier-free release coating composition by adjusting the level of modifier. Examples of suitable release modifiers include trimethylsiloxy-terminated dimethyl, phenylmethylsiloxanes. Alternatively, the release modifier may be a condensation reaction product of an organopolysiloxane resin having hydroxyl or alkoxy groups and a diorganopolysiloxane with at least one hydroxyl or hydrolyzable group. If used, a release modifier can, for example, be used at 0 to 85 parts by weight, alternatively 25 to 85 parts, per 100 parts of starting material (A). Examples of suitable release modifiers are disclosed, for example, in U.S. Patent 8,933,177 and U.S. Patent Application Publication 2016/0053056.

Other optional starting materials which may also be added to the curable silicone release coating composition described herein include, for example, reactive diluents, fragrances, preservatives and fillers, for example, silica, quartz or chalk.

When selecting starting materials for the curable silicone release coating composition, there may be overlap between types of starting materials because certain starting materials described herein may have more than one function. For example, certain particulates may be useful as fillers and as pigments, and even as flame retardants, e.g., carbon black. When adding additional starting materials to the curable silicone release coating composition, the additional starting materials are distinct from starting materials (A) to (E) and from one another.

Alternatively, the curable silicone release coating composition may be free of filler or contains only a limited amount of filler, such as 0 to 30% by weight of the release coating composition. Without wishing to be bound by theory, it is thought that fillers can agglomerate or otherwise stick to the coater equipment used to apply the curable silicone release coating composition to a substrate and/or hinder optical properties, for example transparency, of the release coating and of the release liner formed therewith, if optical transparency is desired. The fillers may be prejudicial to the adherence of an adherend.

The curable silicone release coating composition described herein may be free from fluoroorganosilicone compounds. It is believed that, during the cure, a fluorocompound, because of its low surface tension, will rapidly migrate to the interface of a coating composition and a substrate, for example a polyorganosiloxane release coating composition/PET film interface, and prevent adherence of the release coating (prepared by curing the curable silicone release coating composition) to the substrate by making a fluorine containing barrier. By making a barrier, the fluorocompound prevents any component from reacting at the interface. Moreover, fluorosilicone compounds are usually expensive.

The curable composition may be prepared by combining starting materials comprising (A), (B), (C), (D), and (E) along with any optional additional starting materials, in any order of addition, optionally with a master batch, and optionally under shear.

A method for preparing a coated substrate with the curable silicone release coating composition is also provided. The method comprises coating the curable silicone release coating composition on the substrate. The method further comprises curing the curable composition on the substrate. Curing may be performed by exposure to ultraviolet radiation at low intensity, i.e., ultra-violet radiation at an intensity ≤ 1 J/cm² is sufficient to cure the curable silicone release coating composition on the substrate.

The curable silicone release coating composition described herein may be stored in a coating bath before and/or during coating on the substrate. The coating bath is typically at RT. The curable silicone release coating composition has a pot life ≥ 6 hours at RT in the coating bath. The curable silicone release coating composition may be coated on the substrate in any suitable manner. Typically, the curable silicone release coating composition is applied in wet form via a wet coating technique. In certain embodiments, the curable composition is applied by i) spin coating; ii) brush coating; iii) drop coating; iv) spray coating; v) dip coating; vi) roll coating; vii) flow coating; viii) slot coating; ix) gravure coating; x) Meyer bar coating; or xi) a combination of any of i) to x). Typically, coating the curable silicone release coating composition on the substrate results in a wet deposit on the substrate, which is subsequently cured to give the coated substrate, which comprises a cured film formed from the curable silicone release coating composition on the substrate.

The substrate is not limited and may be any substrate useful for preparing a release liner. In certain embodiments, the substrate comprises a plastic, which maybe a thermosetting and/or thermoplastic. However, the substrate may alternatively comprise paper.

Specific examples of suitable substrates include paper substrates such as Kraft paper, polyethylene coated Kraft paper (PEK coated paper), and regular papers; polymeric substrates such polyamides (PA); polyesters such as polyethylene terephthalates (PET), polybutylene terephthalates (PET), polytrimethylene terephthalates (PTT), polyethylene naphthalates (PEN), liquid crystalline polyesters, and the like; polyolefins such as polyethylenes (PE), polypropylenes (PP), polybutylenes, and the like; styrenic resins; polyoxymethylenes (POM); polycarbonates (PC); polymethylenemethacrylates (PMMA); polyvinyl chlorides (PVC); polyphenylene sulfides (PPS); polyphenylene ethers (PPE); polyimides (PI); polyamideimides (PAI); polyetherimides (PEI); polysulfones (PSU); polyethersulfones; polyketones (PK); polyetherketones; polyvinyl alcohols (PVA); polyetheretherketones (PEEK); polyetherketoneketones (PEKK); polyarylates (PAR); polyethernitriles (PEN); phenolic resins; phenoxy resins; thermoplastic elastomers, such as polystyrene types, polyolefin types, polyurethane types, polyester types, polyamide types, polybutadiene types, polyisoprene types, and fluoro types; and copolymers, modifications, and combinations thereof.

The curable silicone release coating composition, or wet deposit, is typically cured at low temperature with exposure to low intensity ultraviolet radiation. Low temperature may be, e.g., 22°C to 25°C. The exposure conditions are sufficient to effect curing, *i.e.*, cross-linking, of the curable silicone release composition. The exposure depends on various factors including on the elevated temperature is utilized, the temperature selected, desired film thickness, and the presence of absence of any solvent.

The coated substrate may be utilized as a release liner, e.g. for a tape or adhesive, including any pressure-sensitive adhesives, including acrylic resin-type pressure-sensitive adhesives, rubber-type pressure-sensitive adhesives, and silicone-type pressure-sensitive adhesives, as well as acrylic resin-type adhesives, synthetic rubber-type adhesives, silicone-type adhesives, epoxy resin-type adhesives, and polyurethane-type adhesives. Each major surface of the substrate may having a film disposed thereon for double sided tapes or adhesives.

### EXAMPLES

These examples are intended to illustrate the invention to one skilled in the art and are not to be interpreted as limiting the scope of the invention set forth in the claims. Starting materials used in the following examples are described below in Table 1.

**Table 1**

| Name | Description | Vinyl on Si atom% | H on Si atom % | Pt wt% |
|---|---|---|---|---|
| (A-1) | M^{Vi}₄D₁₆₀Q from Dow Silicones Corporation | 0.903 | | |
| (B-1) ) | MD^{H}M with viscosity 20 cs from Dow Silicones Corporation | | 1.6 | |
| (C-1) | 1,3-diethenyl-1,1,3,3-tetramethyldisiloxane complexes platinum (Karstedt's Catalyst) | | | 4 |
| (C-2) [Pt(Me)₃(CpMe)] | Trimethyl(methylcyclopentadienyl)platinum(IV) | Supplied from TCI Korea | | 61 |
| (D-1) ETCH | 1-ethynyl-1-cyclohexanol | | | |
| Omnirad 102 | 2-hydroxy-2-methylpropiophenone | | | |
| TTMSS | Tris(trimethylsilyl)silane | | | |
| (D-2) Diethyl fumarate | (IUPAC : diethyl (E)-but-2-enedioate) C₈H₁₂O₄ | | | |
| (D-3) Diethyl maleate | (IUPAC : diethyl (Z)-but-2-enedioate) C₈H₁₂O₄ | | | |
| (D-4) Diallyl maleate | (IUPAC : bis(prop-2-enyl) (Z)-but-2-enedioate) C₁₀H₁₂O₄ | | | |
| (E-1) Benzyl alcohol | (IUPAC : phenylmethanol) C₆H₅CH₂OH | | | |

In this Reference Example 1, samples of curable silicone release coating compositions were prepared by mixing starting materials from Table 1 in the amounts shown below in Tables 2 and 3.

In this Reference Example 2, curability of each sample prepared as described in Reference Example 1 was evaluated as follows. A 1 µm coating of a sample was made on a PET substrate. The coating was exposed to UV light (Source: Metal halide D-bulb). After exposure the curability was recorded as required UV intensity for phase changing from liquid state to solid state. The results are shown in Tables 2 and 3.

In this Reference Example 3, pot life of each sample prepared as described in Reference Example 1 was evaluated as follows. Pot life was the time when the viscosity doubled as measured using a Brookfield DV-1 viscometer, Temperature 25°C, Spindle: CPA-40Z, Torque >70%). The results are shown in Tables 2 and 3.

**Table 2**

| | | Test-16 | Test-17 | Test-18 | Test-19 | Test-20 | Test-21 | Test-22 | Test-24 | Test-25 | Test-26 | Test-27 | Test-28 |
|---|---|---|---|---|---|---|---|---|---|---|---|---|---|
| Starting Material | Unit | CE1 | CE2 | CE3 | CE4 | CE5 | CE6 | CE7 | CE8 | CE9 | WE10 | CE11 | CE12 |
| (A-1) | pbw | 97.95 | 97.95 | 97.95 | 97.95 | 97.95 | 97.95 | 97.95 | 97.95 | 97.95 | 97.95 | 97.95 | 97.95 |
| (B-1) | | 2.05 | 2.05 | 2.05 | 2.05 | 2.05 | 2.05 | 2.05 | 2.05 | 2.05 | 2.05 | 2.05 | 2.05 |
| (C-1) | Pt ppm | 30 | 30 | 30 | 30 | 30 | 30 | 30 | 30 | 30 | 30 | 30 | 30 |
| (C-2) | | 0 | 0 | 0 | 0 | 0 | 0 | 0 | 0 | 0 | 20 | 20 | 20 |
| (D-2) | ppm | 150 | 300 | 600 | 900 | 1200 | 600 | 600 | 600 | 600 | 600 | 600 | 600 |
| (E-1) | pbw | 0.5 | 0.5 | 0.5 | 0.5 | 0.5 | 0.1 | 0.3 | 0.8 | 1.0 | 0.5 | 0.8 | 1.0 |
| Calculation | | CE1 | CE2 | CE3 | CE4 | CE5 | CE6 | CE7 | CE8 | CE9 | WE10 | CE11 | CE12 |
| (D-2)/Pt | ratio | 5 | 10 | 20 | 30 | 40 | 20 | 20 | 20 | 20 | 20 | 20 | 20 |
| Results | | CE1 | CE2 | CE3 | CE4 | CE5 | CE6 | CE7 | CE8 | CE9 | WE10 | CE11 | CE12 |
| Req'd UV intensity for cure | J/cm² | 1 | 1 | 2 | 3 | 5 | 1 | 1.5 | 4 | 8 | 1 | 2 | 5 |
| Pot life | hr | 0.5 | 3 | 6 | 10 | 24 | 0.5 | 4 | 8 | 12 | 6 | 8 | 12 |

**Table 3 - Additional Comparative Examples**

| | | Test 1 | Test 3 | Test 4 | Test 5 | Test 7 | Test 8 | Test 9 | Test 10 | Test 11 | Test 12 |
|---|---|---|---|---|---|---|---|---|---|---|---|
| Starting Material | Unit | CE13 | CE14 | CE15 | CE16 | CE17 | CE18 | CE19 | CE20 | CE21 | CE22 |
| (A-1) | pbw | 97.95 | 97.95 | 97.95 | 97.95 | 97.95 | 97.95 | 97.95 | 97.95 | 97.95 | 97.95 |
| (B-1) | | 2.05 | 2.05 | 2.05 | 2.05 | 2.05 | 2.05 | 2.05 | 2.05 | 2.05 | 2.05 |
| (C-1) | Pt ppm | 30 | 30 | 30 | | 30 | 30 | 68 | 68 | 68 | 30 |
| (C-2) | | | | | 30 | | | | | | |
| (D-1) | ppm | 600 | | | | | | 120 | | 600 | |
| (D-2) | | | | | | | | | 120 | | 600 |
| (D-3) | | | 600 | | | 600 | | | | | |
| (D-4) | | | | 600 | | | 600 | | | | |
| (E-1) | pbw | | | | | 0.5 | 0.5 | | | | |
| Omnirad 201 | ppm | | | | | | | 310 | 310 | 310 | |
| TTMSS | ppm | | | | | | | 4.6 | 4.6 | 4.6 | |
| Results | | CE13 | CE14 | CE15 | CE16 | CE17 | CE18 | CE19 | CE20 | CE21 | CE22 |
| Req'd UV intensity for cure | J/cm² | Not Cured | 2 | 4 | 4 | 2 | 4 | 1 | - | 6 | 2 |
| Pot life | hr | > 8 | 2 | 3 | no viscosity increase | 6 | 7 | <5min* | 0 | 4 | 2 |

In Tables 2 and 3, 'CE' means comparative example, 'WE' means working example, 'pbw' means parts by weight, 'ppm' means parts per million by weight, and `hr' means hours.

Comparative example 13 shows that when (D-1) ETCH was used as the inhibitor with only one of the two catalysts (C-1), the sample would not cure under the conditions tested.

Comparative Example 14 shows that that when diethyl maleate (D-3) was used as the inhibitor, and the benzyl alcohol (E-1) was omitted, then pot life was not sufficiently extended even with only one of the two catalysts from the catalyst package present. Comparative example 17 shows that when benzyl alcohol was added to the composition of comparative example 14, the sample had insufficient curability under the conditions tested.

Comparative Example 15 shows that when diallyl maleate (D-4) was used as the inhibitor, and the benzyl alcohol was omitted, then the sample failed both the curability and pot life tests. Comparative example 18 shows that when benzyl alcohol was added to the composition of comparative example 15, the sample still had insufficient curability under the conditions tested.

Comparative example 16 shows that when one catalyst from the catalyst package, i.e., (C-2) but not (C-1) was used without inhibitor and without benzyl alcohol, the sample failed the curability test.

Comparative examples 19-21 show that when a composition including starting materials disclosed by WO2015/090551, sufficient pot life and curability could not be obtained under the conditions tested.

Comparative Example 22 shows that when diethyl fumarate (D-2) was used as the inhibitor with only one of the two catalysts (C-1) and without benzyl alcohol, sufficient pot life and curability could not be obtained under the conditions tested. Comparative example 3 shows that when benzyl alcohol was added to the composition of comparative example 22, insufficient curability was obtained. Comparative examples 1-5 show that when diethyl fumarate (D-2) was used as the inhibitor with only one of the two catalysts (C-1), sufficient pot life and curability could not be obtained simultaneously under the conditions tested. Comparative examples 6-9 show that when adding different amounts of benzyl alcohol to the composition of comparative example 22, sufficient pot life and curability could not be obtained simultaneously under the conditions tested.

Comparative examples 11 and 12 show that when too much benzyl alcohol was added, curability was insufficient. The inventors surprisingly found that benzyl alcohol acts as a catalyst inhibitor at loading ≥ 0.8 pbw based on combined weights of starting materials (A), (B), (C), (D) and (E) under the conditions tested. Working example 10 shows that when a curable silicone release coating composition contains all of starting materials (A), (B), (C), (D) and (E) in the amounts described herein, both sufficient pot life and curability with low intensity radiation can be achieved, e.g., the radiation intensity for cure may be ≤ 1 J/cm² and pot life may be ≥ 6 hours.

### Industrial Applicability

The inventors surprisingly found that starting material (E), the primary or secondary alcohol (e.g., benzyl alcohol in the examples above) can have an inhibiting effect on the catalyst package when used in an amount that is too high. Without wishing to be bound by theory, it is thought that when the amount of benzyl alcohol is too high (i.e., ≥ 0.8 parts by weight), then the benzyl alcohol acts as a catalyst inhibitor, which detrimentally impacts curability by increasing the radiation intensity needed to cure the composition (e.g., to > 1 J/cm²). Without wishing to be bound by theory, it is thought that when the amount of benzyl alcohol is too low (i.e. < 0.3%), a sufficient increase in pot life is not achieved.

## Claims

1. A curable silicone release coating composition comprising:
90 to 99 weight parts of (A) a polyorganosiloxane having at least two aliphatically unsaturated groups per molecule,
1 to 10 weight parts of (B) a polyorganohydrogensiloxane,
(C) a platinum hydrosilylation reaction catalyst package comprising
(C-1) a complex of platinum with an alkenyl-functional polyorganosiloxane in an amount sufficient to provide < 200 ppm of platinum metal, based on combined weights of starting materials (A), (B), (C), (D), and (E); and
(C-2) a platinum complex having a cyclopentadienyl group that is eta-bonded to the platinum atom and an alkyl group and/or an aryl group that is sigma-bonded to the platinum atom in an amount sufficient to provide ≤ 100 ppm of platinum, based on combined weights of starting materials (A), (B), (C), (D), and (E);
wherein combined amounts of (C-1) and (C-2) are sufficient to provide a platinum content of 10 ppm to 200 ppm based on combined weights of starting materials (A), (B), (C), (D), and (E); and
(D) an inhibitor in an amount of > 300 ppm to < 900 ppm, based combined weights of starting materials (A), (B), (C), (D), and (E); where the inhibitor is selected from the group consisting of
(D-1) a fumarate of formula 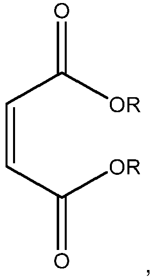 and
(D-2) a maleate of formula 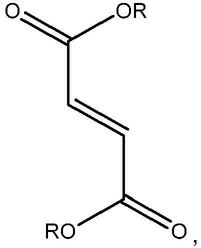 where each R is independently selected from the group consisting of an alkyl group of 1 to 4 carbon atoms and an alkenyl group of 2 to 4 carbon atoms; and
(E) a primary or secondary alcohol in an amount of > 0.3 parts by weight < 0.8 parts by weight based on combined weights of starting materials (A), (B), (C), (D), and (E).

2. The composition of claim 1, where starting material (A) is a branched polyorganosiloxane of formula: 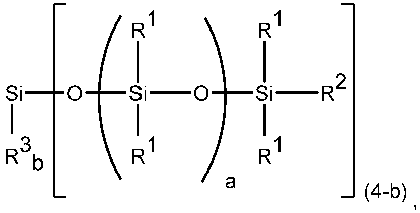 where each R¹ is an independently selected monovalent hydrocarbon group free of aliphatic unsaturation; each R² is independently selected from the group consisting of R¹ and an aliphatically unsaturated monovalent hydrocarbon group, with the proviso that, on average per molecule, at least two instances of R² are the aliphatically unsaturated monovalent hydrocarbon group; subscript b is 0 or 1; R³ is an independently selected monovalent hydrocarbon group free of aliphatic unsaturation; each subscript a independently has a value of 30 to 60.

3. The composition of claim 1 or claim 2, where starting material (B) has unit formula (R¹₃SiO_{1/2})ₚ(R¹₂SiO_{2/2})_{q}(R¹HSiO_{2/2})ᵣ(R¹₂HSiO_{1/2})ₛ, where subscript p is 0, 1, or 2; subscript s is 0, 1, or 2; a quantity (p + s) ₌ 2, subscript r ≥ 0, subscript q ≥ 1, with the proviso that when r ₌ 0, then s ≥ 3; and 5 ≤ (p + q + r + s) ≤ 100.

4. The composition of any one of claims 1 to 3, where starting material (C-1) is Karstedt's catalyst in an amount sufficient to provide 20 ppm to 40 ppm platinum and starting material (C-2) is trimethyl(methylcyclopentadienyl)platinum(IV) in an amount sufficient to provide 10 ppm to 30 ppm platinum.

5. The composition of any one of claims 1 to 4, where starting material (D) is selected from the group consisting of diethyl maleate, diallyl maleate, diethyl fumarate, diallyl fumarate, and a combination of two or more thereof.

6. The composition of any one of claims 1 to 5, where starting material (D) is present in an amount of 400 ppm to 800 ppm.

7. The composition of any one of claims 1 to 6, where starting material (E) is selected from the group consisting of an alkanol and an aromatic alcohol.

8. The composition of claim 7, where starting material (E) is an aromatic alcohol selected from the group consisting of benzyl alcohol, phenol, methylphenyl carbinol, and 2-phenylethyl alcohol.

9. The composition of any one of claims 1 to 8, where starting material (E) is benzyl alcohol present in an amount of 0.5 parts by weight, based on combined weights of starting materials (A), (B), (C), (D), and (E).

10. The composition of any one of claims 1 to 9, further comprising an additional starting material selected from the group consisting of (F) an anchorage additive, (G) a solvent, (H) a release force modifier, (I) a filler, and (J) a combination of two or more of (F), (G), (H), and (I).

11. A method for preparing a silicone release coating, the method comprising:
optionally 1) pre-treating a surface of a substrate;
2) coating, on the surface of the substrate, a curable silicone release coating composition comprising
90 to 99 weight parts of (A) a polyorganosiloxane having at least two aliphatically unsaturated groups per molecule,
1 to 10 weight parts of (B) a polyorganohydrogensiloxane,
(C) a platinum hydrosilylation reaction catalyst package comprising
(C-1) a complex of platinum with an alkenyl-functional polyorganosiloxane in an amount sufficient to provide < 200 ppm of platinum metal, based on combined weights of starting materials (A), (B), (C), (D), and (E); and
(C-2) a platinum complex having a cyclopentadienyl group that is eta-bonded to the platinum atom and an alkyl group and/or an aryl group that is sigma-bonded to the platinum atom in an amount sufficient to provide ≤ 100 ppm of platinum, based on combined weights of starting materials (A), (B), (C), (D), and (E);
wherein combined amounts of (C-1) and (C-2) are sufficient to provide a platinum content of 10 ppm to 200 ppm based on combined weights of starting materials (A), (B), (C), (D), and (E); and
(D) an inhibitor in an amount of > 300 ppm to < 1,000 ppm, based combined weights of starting materials (A), (B), (C), (D), and (E); where the inhibitor is selected from the group consisting of
(D-1) a fumarate of formula 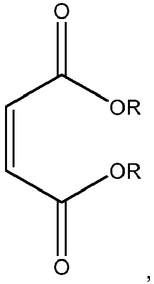 and
(D-2) a maleate of formula 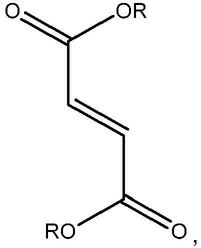 where each R is independently selected from the group consisting of an alkyl group of 1 to 4 carbon atoms and an alkenyl group of 2 to 4 carbon atoms;
(E) a primary or secondary alcohol in an amount of > 0.3 parts by weight to < 0.8 parts by weight; based on combined weights of starting materials (A), (B), (C), (D), and (E);
optionally (F) an anchorage additive;
optionally (G) a solvent;
optionally (H) a release force modifier; and
optionally (I) a filler;
optionally 3) when (G) the solvent is present, removing all, or a portion, of the solvent; 4) exposing the curable silicone release coating composition to ultra-violet radiation at an intensity ≤ 1 J/cm².

12. The method of claim 11, wherein during step 2), the curable silicone release coating composition is in a coating bath with a residence time of at least 6 hours under ambient conditions.

## Patentansprüche

1. Härtbare Silikontrennbeschichtungszusammensetzung, umfassend:
90 bis 99 Gewichtsteile (A) eines Polyorganosiloxans mit mindestens zwei aliphatisch ungesättigten Gruppen pro Molekül,
1 bis 10 Gewichtsteile (B) eines Polyorganohydrogensiloxans,
(C) ein Katalysatorpaket für eine Platin-Hydrosilylierungsreaktion, umfassend
(C-1) einen Platinkomplex mit einem alkenylfunktionellen Polyorganosiloxan in einer Menge, die ausreicht, um bezogen auf die zusammengenommenen Gewichte der Ausgangsmaterialien (A), (B), (C), (D) und (E) <200 ppm Platinmetall bereitzustellen; und
(C-2) einen Platinkomplex mit einer Cyclopentadienylgruppe, die zum Platinatom eine Eta-Bindung aufweist, und einer Alkylgruppe und/oder einer Arylgruppe, die zum Platinatom eine Sigma-Bindung aufweist, in einer Menge, die ausreicht, um bezogen auf die zusammengenommenen Gewichte der Ausgangsmaterialien (A), (B), (C), (D) und (E) ≤100 ppm Platin bereitzustellen;
wobei zusammengenommenen Mengen von (C-1) und (C-2) ausreichen, um bezogen auf die zusammengenommenen Gewichte der Ausgangsmaterialien (A), (B), (C), (D) und (E) einen Platingehalt von 10 ppm bis 200 ppm bereitzustellen; und
(D) einen Inhibitor in einer Menge von >300 ppm bis <900 ppm bezogen auf die zusammengenommenen Gewichte der Ausgangsmaterialien (A), (B), (C), (D) und (E); wobei der Inhibitor ausgewählt ist aus der Gruppe, bestehend aus
(D-1) einem Furmarat der Formel 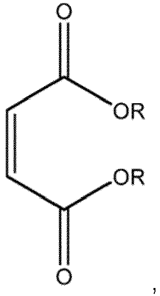 und
(D-2) einem Maleat der Formel 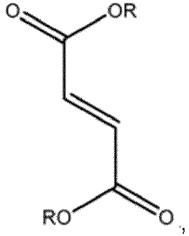 wobei jedes R unabhängig voneinander aus der Gruppe ausgewählt ist, die aus einer Alkylgruppe aus 1 bis 4 Kohlenstoffatomen und einer Alkenylgruppe aus 2 bis 4 Kohlenstoffatomen besteht; und
(E) einen primären oder sekundären Alkohol in einer Menge von >0,3 Gewichtsteilen <0,8 Gewichtsteilen bezogen auf die zusammengenommenen Gewichte der Ausgangsmaterialien (A), (B), (C), (D) und (E).

2. Zusammensetzung nach Anspruch 1, wobei das Ausgangsmaterial (A) ein verzweigtes Polyorganosiloxan der Formel: 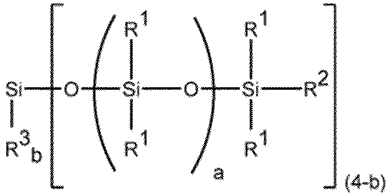 ist, wobei jedes R¹ eine unabhängig voneinander ausgewählte einwertige Kohlenwasserstoffgruppe ist, die frei von aliphatischer Ungesättigtheit ist; jedes R² unabhängig voneinander ausgewählt ist aus der Gruppe, die aus R¹und einer aliphatisch ungesättigten einwertigen Kohlenwasserstoffgruppe besteht, mit der Maßgabe, dass im Durchschnitt pro Molekül mindestens zwei Vorkommen von R² die aliphatisch ungesättigte einwertige Kohlenwasserstoffgruppe sind; das tiefgestellte b 0 oder 1 ist; R³ eine unabhängig ausgewählte einwertige Kohlenwasserstoffgruppe ist, die frei von aliphatischer Ungesättigtheit ist; und jedes tiefgestellte a unabhängig voneinander einen Wert von 30 bis 60 aufweist.

3. Zusammensetzung nach Anspruch 1 oder 2, wobei Ausgangsmaterial (B) die Einheitsformel (R¹₃SiO_{1/2})ₚ(R¹₂SiO_{2/2})_{q}(R¹HSiO_{2/2})ᵣ(R¹₂HSiO_{1/2})ₛ aufweist, wobei das tiefgestellte p 0, 1 oder 2 ist; das tiefgestellte s 0, 1 oder 2 ist; eine Menge (p + s) = 2, das tiefgestellte r ≥ 0, das tiefgestellte q ≥ 1, mit der Maßgabe, dass, wenn r = 0, dann s ≥ 3; und 5 ≤ (p + q + r + s) ≤ 100.

4. Zusammensetzung nach einem der Ansprüche 1 bis 3, wobei das Ausgangsmaterial (C-1) ein Karstedt-Katalysator in einer Menge ist, die ausreicht, um 20 ppm bis 40 ppm Platin bereitzustellen, und das Ausgangsmaterial (C-2) Trimethyl(methylcyclopentadienyl)platin(IV) in einer Menge ist, die ausreicht, um 10 ppm bis 30 ppm Platin bereitzustellen.

5. Zusammensetzung nach einem der Ansprüche 1 bis 4, wobei Ausgangsmaterial (D) aus der Gruppe ausgewählt ist, die aus Diethylmaleat, Diallylmaleat, Diethylfumarat, Diallylfumarat und einer Kombination von zwei oder mehr davon besteht.

6. Zusammensetzung nach einem der Ansprüche 1 bis 5, wobei Ausgangsmaterial (D) in einer Menge von 400 ppm bis 800 ppm vorliegt.

7. Zusammensetzung nach einem der Ansprüche 1 bis 6, wobei Ausgangsmaterial (E) aus der Gruppe ausgewählt ist, die aus Alkanol und einem aromatischen Alkohol besteht.

8. Zusammensetzung nach Anspruch 7, wobei das Ausgangsmaterial (E) ein aromatischer Alkohol ist, der aus der Gruppe ausgewählt ist, die aus Benzylalkohol, Phenol, Methylphenylcarbinol und 2-Phenylethylalkohol besteht.

9. Zusammensetzung nach einem der Ansprüche 1 bis 8, wobei das Ausgangsmaterial (E) Benzylalkohol ist, der bezogen auf die zusammengenommenen Gewichte der Ausgangsmaterialien (A), (B), (C), (D) und (E) in einer Menge von 0,5 Gewichtsteilen vorliegt.

10. Zusammensetzung nach einem der Ansprüche 1 bis 9, ferner umfassend ein zusätzliches Ausgangsmaterial, das aus der Gruppe ausgewählt ist, die aus (F) einem Haftvermittlungsadditiv, (G) einem Lösungsmittel, (H) einem Trennkraftmodifizierer, (I) einem Füllstoff und (J) einer Kombination von zwei oder mehr von (F), (G), (H) und (I) besteht.

11. Verfahren zum Herstellen einer Silikontrennbeschichtung, wobei das Verfahren Folgendes umfasst:
gegebenenfalls 1) Vorbehandeln einer Oberfläche eines Substrats;
2) Beschichten der Oberfläche des Substrats mit einer härtbaren Silikontrennbeschichtungszusammensetzung, umfassend
90 bis 99 Gewichtsteile (A) eines Polyorganosiloxans mit mindestens zwei aliphatisch ungesättigten Gruppen pro Molekül,
1 bis 10 Gewichtsteile (B) eines Polyorganohydrogensiloxans,
(C) ein Katalysatorpaket für eine Platin-Hydrosilylierungsreaktion, umfassend
(C-1) einen Platinkomplex mit einem alkenylfunktionellen Polyorganosiloxan in einer Menge, die ausreicht, um bezogen auf die zusammengenommenen Gewichte der Ausgangsmaterialien (A), (B), (C), (D) und (E) <200 ppm Platinmetall bereitzustellen; und
(C-2) einen Platinkomplex mit einer Cyclopentadienylgruppe, die zum Platinatom eine Eta-Bindung aufweist, und einer Alkylgruppe und/oder einer Arylgruppe, die zum Platinatom eine Sigma-Bindung aufweist, in einer Menge, die ausreicht, um bezogen auf die zusammengenommenen Gewichte der Ausgangsmaterialien (A), (B), (C), (D) und (E) ≤100 ppm Platin bereitzustellen;
wobei zusammengenommenen Mengen von (C-1) und (C-2) ausreichen, um bezogen auf die zusammengenommenen Gewichte der Ausgangsmaterialien (A), (B), (C), (D) und (E) einen Platingehalt von 10 ppm bis 200 ppm bereitzustellen; und
(D) einen Inhibitor in einer Menge von >300 ppm bis <1.000 ppm bezogen auf die zusammengenommenen Gewichte der Ausgangsmaterialien (A), (B), (C), (D) und (E); wobei der Inhibitor ausgewählt ist aus der Gruppe, bestehend aus
(D-1) einem Furmarat der Formel 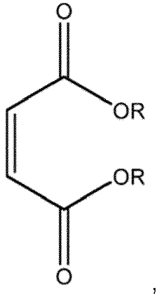 und
(D-2) einem Maleat der Formel 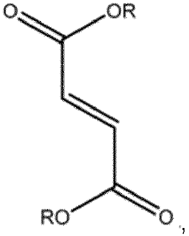 wobei jedes R unabhängig voneinander aus der Gruppe ausgewählt ist, die aus einer Alkylgruppe aus 1 bis 4 Kohlenstoffatomen und einer Alkenylgruppe aus 2 bis 4 Kohlenstoffatomen besteht;
(E) einen primären oder sekundären Alkohol in einer Menge von >0,3 Gewichtsteilen <0,8 Gewichtsteilen; bezogen auf die zusammengenommenen Gewichte der Ausgangsmaterial (A), (B), (C), (D) und (E);
optional (F) ein Haftvermittlungsadditiv;
optional (G) ein Lösungsmittel;
optional (H) einen Trennkraftmodifizierer; und
optional (I) ein Füllmittel;
optional 3), wenn (G) das Lösungsmittel vorliegt, Entfernen des gesamten oder eines Teils des Lösungsmittels;
4) Aussetzen der härtbaren Silikontrennbeschichtungszusammensetzung gegenüber ultravioletten Strahlung mit einer Intensität ≤1 J/cm².

12. Verfahren nach Anspruch 11, wobei sich die härtbare Silikontrennbeschichtungszusammensetzung während Schritt 2) in einem Beschichtungsbad unter Umgebungsbedingungen mit einer Verweilzeit von mindestens 6 Stunden befindet.

## Revendications

1. Composition de revêtement antiadhésif en silicone durcissable comprenant :
90 à 99 parties en poids de (A) un polyorganosiloxane ayant au moins deux groupes à insaturation aliphatique par molécule,
1 à 10 parties en poids de (B) un polyorganohydrogénosiloxane,
(C) un ensemble catalyseur de réaction d'hydrosilylation au platine comprenant
(C-1) un complexe de platine avec un polyorganosiloxane à fonction alcényle en une quantité suffisante pour fournir < 200 ppm de platine métallique, sur la base des poids combinés de matériaux de départ (A), (B), (C), (D) et (E) ; et
(C-2) un complexe de platine ayant un groupe cyclopentadiényle qui est lié par liaison êta à l'atome de platine et un groupe alkyle et/ou un groupe aryle qui est lié par liaison sigma à l'atome de platine en une quantité suffisante pour fournir ≤ 100 ppm de platine, sur la base des poids combinés de matériaux de départ (A), (B), (C), (D) et (E) ;
dans laquelle des quantités combinées de (C-1) et (C-2) sont suffisantes pour fournir une teneur en platine de 10 ppm à 200 ppm sur la base des poids combinés de matériaux de départ (A), (B), (C), (D) et (E) ; et
(D) un inhibiteur à raison de > 300 ppm jusqu'à < 900 ppm, sur la base des poids combinés de matériaux de départ (A), (B), (C), (D) et (E) ; dans laquelle l'inhibiteur est choisi dans le groupe constitué par
(D-1) un furmarate de formule 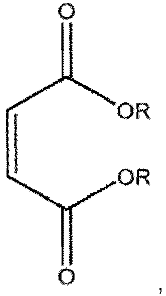 et
(D-2) un maléate de formule 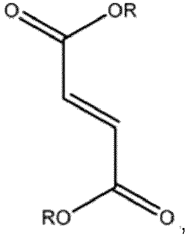 dans laquelle chaque R est indépendamment choisi dans le groupe constitué par un groupe alkyle de 1 à 4 atomes de carbone et d'un groupe alcényle de 2 à 4 atomes de carbone ; et
(E) un alcool primaire ou secondaire à raison de > 0,3 partie en poids < 0,8 partie en poids sur la base des poids combinés de matériaux de départ (A), (B), (C), (D) et (E).

2. Composition selon la revendication 1, dans laquelle la matériau de départ (A) est un polyorganosiloxane ramifié de formule : 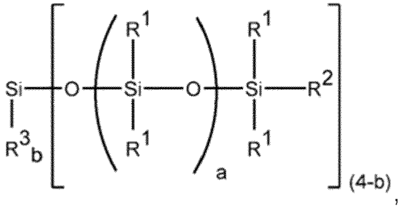 dans laquelle chaque R¹ est un groupe hydrocarboné monovalent choisi indépendamment exempt d'insaturation aliphatique ; chaque R² est indépendamment choisi dans le groupe constitué par R¹ et un groupe hydrocarboné monovalent à insaturation aliphatique, à condition que, en moyenne par molécule, au moins deux instances de R² soient le groupe hydrocarboné monovalent à insaturation aliphatique ; l'indice b vaut 0 ou 1 ; R² est un groupe hydrocarboné monovalent choisi indépendamment exempt d'insaturation aliphatique ; chaque indice a a indépendamment une valeur de 30 à 60.

3. Composition selon la revendication 1 ou la revendication 2, dans laquelle la matériau de départ (B) a la formule
unitaire (R¹₃SiO_{1/2})ₚ(R¹₂SiO_{2/2})_{q}(R¹HSiO_{2/2})ᵣ(R¹₂HSiO_{1/2})ₛ, dans laquelle l'indice p vaut 0, 1 ou 2 ; l'indice s vaut 0, 1 ou 2 ; une quantité (p + s) = 2, l'indice r ≥ 0, l'indice q ≥ 1, à condition que lorsque r = 0, alors s ≥ 3 ; et 5 ≤ (p + q + r + s) ≤ 100.

4. Composition selon l'une quelconque des revendications 1 à 3, dans laquelle le matériau de départ (C-1) est un catalyseur de Karstedt en une quantité suffisante pour fournir 20 ppm à 40 ppm de platine et le matériau de départ (C-2) est le triméthyl(méthylcyclopentadiényl)platine (IV) en une quantité suffisante pour fournir 10 ppm à 30 ppm de platine.

5. Composition selon l'une quelconque des revendications 1 à 4, dans laquelle le matériau de départ (D) est choisi dans le groupe constitué par maléate de diéthyle, maléate de diallyle, fumarate de diéthyle, fumarate de diallyle, et combinaison de deux de ceux-ci ou plus.

6. Composition selon l'une quelconque des revendications 1 à 5, dans laquelle le matériau de départ (D) est présent à raison de 400 ppm à 800 ppm.

7. Composition selon l'une quelconque des revendications 1 à 6, dans laquelle le matériau de départ (E) est choisi dans le groupe constitué par un alcanol et un alcool aromatique.

8. Composition selon la revendication 7, dans laquelle le matériau de départ (E) est un alcool aromatique choisi dans le groupe constitué par alcool benzylique, phénol, méthylphénylcarbinol, et alcool 2-phényléthylique.

9. Composition selon l'une quelconque des revendications 1 à 8, dans laquelle le matériau de départ (E) est l'alcool benzylique présent à raison de 0,5 partie en poids, sur la base des poids combinés de matériaux de départ (A), (B), (C), (D) et (E).

10. Composition selon l'une quelconque des revendications 1 à 9, comprenant en outre un matériau de départ supplémentaire choisi dans le groupe constitué par (F) un additif d'ancrage, (G) un solvant, (H) un modificateur de force antiadhésif, (I) une charge, et (J) une combinaison de deux ou plus parmi (F), (G), (H) et (I).

11. Procédé de préparation d'un revêtement antiadhésif en silicone, le procédé comprenant : facultativement 1) le pré-traitement d'une surface d'un substrat ;
2) le revêtement, sur la surface du substrat, d'une composition de revêtement antiadhésif en silicone durcissable comprenant
90 à 99 parties en poids de (A) un polyorganosiloxane ayant au moins deux groupes à insaturation aliphatique par molécule,
1 à 10 parties en poids de (B) un polyorganohydrogénosiloxane,
(C) un ensemble catalyseur de réaction d'hydrosilylation au platine comprenant
(C-1) un complexe de platine avec un polyorganosiloxane à fonction alcényle en une quantité suffisante pour fournir < 200 ppm de platine métallique, sur la base des poids combinés de matériaux de départ (A), (B), (C), (D) et (E) ; et
(C-2) un complexe de platine ayant un groupe cyclopentadiényle qui est lié par liaison êta à l'atome de platine et un groupe alkyle et/ou un groupe aryle qui est lié par liaison sigma à l'atome de platine en une quantité suffisante pour fournir ≤ 100 ppm de platine, sur la base des poids combinés de matériaux de départ (A), (B), (C), (D) et (E) ;
dans laquelle des quantités combinées de (C-1) et (C-2) sont suffisantes pour fournir une teneur en platine de 10 ppm à 200 ppm sur la base des poids combinés de matériaux de départ (A), (B), (C), (D) et (E) ; et
(D) un inhibiteur en une quantité de > 300 ppm à < 1 000 ppm, sur la base des poids combinés de matériaux de départ (A), (B), (C), (D), et (E) ; dans laquelle l'inhibiteur est choisi dans le groupe constitué par
(D-1) un furmarate de formule 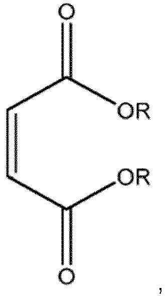 et
(D-2) un maléate de formule 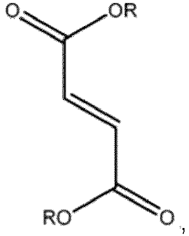 dans laquelle chaque R est indépendamment choisi dans le groupe constitué par un groupe alkyle de 1 à 4 atomes de carbone et d'un groupe alcényle de 2 à 4 atomes de carbone ;
(E) un alcool primaire ou secondaire à raison de > 0,3 partie en poids < 0,8 partie en poids ; en fonction des poids combinés des matériaux de départ (A), (B), (C), (D), et (E) ;
facultativement (F) un additif d'ancrage ;
facultativement (G) un solvant ;
facultativement (H) un modificateur de force antiadhésif ; et
facultativement (I) une charge ;
facultativement 3) lorsque (G) le solvant est présent, l'élimination totale, ou partielle, du solvant ;
4) l'exposition de la composition de revêtement antiadhésif en silicone durcissable à un rayonnement ultraviolet à une intensité ≤ 1 J/cm².

12. Procédé selon la revendication 11, dans lequel pendant l'étape 2), la composition de revêtement antiadhésif en silicone durcissable est dans un bain de revêtement avec un temps de séjour d'au moins 6 heures dans des conditions ambiantes.
